Europäisches Patentamt

European Patent Office

Office européen des brevets

(11) Veröffentlichungsnummer: **0 293 552**
**A2**

## EUROPÄISCHE PATENTANMELDUNG

(21) Anmeldenummer: **88101841.0**

(22) Anmeldetag: **09.02.88**

(51) Int. Cl.4: **A21D 13/00**

(30) Priorität: **11.02.87 DE 3704192**

(43) Veröffentlichungstag der Anmeldung:
**07.12.88 Patentblatt 88/49**

(84) Benannte Vertragsstaaten:
**AT BE CH DE FR GB IT LI NL SE**

(71) Anmelder: **Nockemann, Otto**
**Homertskamp 10**
**D-5270 Gummersbach 1(DE)**

(72) Erfinder: **Nockemann, Otto**
**Homertskamp 10**
**D-5270 Gummersbach 1(DE)**

(54) **Gefüllte Gebäcktasche.**

(57) Solche Gebäcktaschen werden im sogenannten Fast-Food- Markt wie Imbißstuben, Schnellrestaurants und dergleichen angeboten, um das Einnehmen vielseitiger, kalter und warmer Mahlzeiten auf einfache Weise, ohne Zuhilfenahme von Eßgeschirren in Anspruch nehmen zu müssen und auch im Stehen zu ermöglichen.

Um das Verzehren solcher auch feuchter Mahlzeiten ohne Gefahr der Verschmutzung von Händen und Kleidung zu ermöglichen, sind die Gebäcktaschen auf Formanlagen hergestellte Behälter beliebiger Größe aus wohlschmeckendem Backwerk mit dichten, elastischen Wänden in welche die Speisen nach Kundenwunsch sowohl in loser Form als auch in passend geformten Stücken eingebracht und verzehrfertig gemacht werden.

Fig.1

EP 0 293 552 A2

### Gefüllte Gebäcktasche

Die Erfindung betrifft ein Verfahren und die zugehörigen Sachen zur Herstellung verzehrfertiger gefüllter Gebäcktaschen, die geeignet sind, im Marktbereich, Imbißstuben, Schnellrestaurants und dergleichen, dem sogenannten Fast-Food-Markt, angeboten zu werden, in ähnlicher Art, wie es beim gefüllten Fladenbrot aus dem arabischen Raum bekannt ist.

Solche Zusammenstellungen von Lebensmitteln, außen Backwaren und als Füllung Fleisch, Gemüsespeisen und dergleichen, ermöglichen das schnelle Einnehmen, oft im Stehen, auf der Fahrt, z.B. in Autos oder Zügen, bon Mahlzeiten, ohne daß Geschirre, wie Teller, Bestecke, und Bedienung erforderlich sind. Dieses Angebot an Mahlzeiten ist somit auch gut geeignet,bei den verschiedensten Veranstaltungen des Sports oder kultureller Art, im Picknickbereich, an Ausflugsorten, Bahnhöfen und dergleichen feilgeboten zu werden.

Bei dem aus dem arabischen Raum bekannten sogenannten Fladenbrot handelt es sich um ein flaches, rundgeformtes Gebäck, das zur Steigerung des Genusses und der ernährungsmäßigen Vollwertigkeit mit sonstigen Lebensmitteln, wie z.B. Gemüsen, Fleischgerichten, Salaten, gefüllt wird. Durch die Zutaten und die Backart des Fladenbrotes entsteht in seinem Inneren ein Hohlraum, und es wird anschließend eine Außenseite auf- bzw. so abgeschnitten, daß hierdurch die Füllung eingebracht werden kann.

Nachteilig ist hierbei, daß die Größe des Hohlraumes nicht exakt bestimmbar ist, also sehr verschieden ausfällt, so daß dieser oft durch Aufbiegen bzw. Erweitern vergrößert wird, wobei aber die Gefahr des Reißens der Wandung, die auch in sich verschieden stark ausfällt, bzw. des Auseinanderklaffens und somit des Undichtwerdens besteht. Hierdurch ist meist die Menge der Füllung sehr unterschiedlich, was unerwünscht ist und zu Reklamationen und Verärgerungen führt. Bei Undichtheiten entweichen die Säfte der Füllungen, so daß die Aufgabe des Fladens, Verluste und Verunreinigungen zu vermeiden, nicht mehr genügend erfüllt wird. Auch ist der Anteil der Brotmasse zur möglichen Füllmenge größer als erwünscht, was ernährungsmäßig und geschmacklich als nachteilig empfunden wird.

Bei kleineren Fladenbroten ist das Verhältnis der Brotmasse zum Hohlraum meist noch ungünstiger, so daß oft derselbe durch Herausschneiden von inneren Brotanteilen geschaffen wird, was aufwendig ist, Geschicklichkeit erfordert und Verlust an Nährmitteln darstellt. Außerdem ist es unwirtschaftlich, daß solche Fladenbrote und besonders die einzufüllenden Speisen, damit sie frisch sind, mehrmals am Tage hergestellt werden müssen, auch um die notwendige Hygiene zu gewährleisten.

Zu dem Nachteil der stark unterschiedlichen Größe der Hohlräume treten noch die zunächst nicht vom Kunden wahrnehmbaren größeren Unterschiede bei den meist von Hand portionierten Füllungen, so daß eine an sich erforderliche Gleichmäßigkeit in bezug auf die einzelnen Bestandteile nicht gegeben ist, was insbesondere beim professionellen Verkauf nicht tragbar ist.

Noch größere Nachteile weisen die in runder Ballenform hergestellten Pita-Backwaren auf, wie sie vornehmlich aus der Türkei und Griechenland bekannt sind. Diese haben keine Hohlräume und werden je nach Größe entweder zuerst geteilt und seitlich aufgeschnitten oder nur seitlich aufgeschnitten und dann ein Teil des inneren Backwerks zur Schaffung eines Hohlraumes entfernt bzw. verdrängt, um so in diesen die als Füllung in Betracht kommenden Lebensmittel hineinlegen zu können. Hier besteht ein noch höherer Backwarenanteil, und der geschaffene Hohlraum sowie die in diesen eingelegte Menge der hochwertigeren Speisen zur Füllung variieren sehr stark, was für Verkäufer und Kunden Unsicherheiten und Unzufriedenheit bringt.

Am ungünstigsten liegen aber die Verhältnisse beim Einlegen von Fleisch-, Fisch- bzw. Käseportionen, meist als gebratene Stücke mit Gemüsebeilagen, Ketchup und anderen Soßen, zwischen aufgeschnittene flache Brötchen oder lose Brotscheiben, was auch als "Hamburger" bezeichnet wird, da eine Seitenbegrenzung für die feuchten und breiigen Einlagen völlig fehlt. Hierdurch treten die Füllungen seitlich stark aus bzw. ihre Flüssigkeitsanteile triefen ab. Neben diesen Verlusten ist die Beschmutzung der Hände und Kleidung sowie die erforderliche vorgebeugte Körper- und schiefe Kopfhaltung beim Verzehr unangenehm.

Auch die sogenannten Hot Dogs, bei denen in aufgeschnittenen länglichen Brötchen oder Baguettes mit Soßen oder sonstigen Stoffen bestrichene Würste eingesteckt sind, schließen die Beschmutzung und ungünstige Körperhaltung beim Verzehr nicht aus.

Auch wenn zu Brötchen oder Brotscheiben lose Würste mit Senf und dgl. angeboten werden, liegt ebenso die Gefahr des Sich-Bespritzens vor, und es handelt sich um eine einseitige Kost, die nur als eine Notlösung für Ausnahmefälle anzusehen ist.

Ernährungswissenschaftlich besteht demnach bei allen bekannten Schnellimißgerichten dieser Art der besondere Nachteil, daß sie nicht mit oder nur mit zu geringen Mengen im Verhältnis vom Brotanteil zu Gemüsen und frischen Salaten oder auch Obstsorten ergänzt werden können, wie es z.B. für Jugendliche in der Ausbildung und für sich oft außer Haus befindliche Personen, die aus finanziellen und Zeitgründen auf Imbißstuben oder ähnliche Anbieter angewiesen sind, wichtig wäre.

So ist es beispielsweise auch nicht möglich, feuchtes, aber sehr gesundes Sauerkraut oder andere Gemüsegerichte ohne Teller und Besteck zu verzehren, da auch hier die Flüssigkeit, falls sie zwischen Backwaren gelegt werden, seitlich abfließen würde.

Bekannt gewordene Teigwaren mit Füllung, wie z.B. Maultaschen, Ravioli, müssen vor dem Verzehr gekocht werden, sie sind daher nicht mit den Händen zu essen, und ihr Inhalt kann nicht nach den jeweiligen Wünschen zusammengestellt werden, außerdem bestehen die Füllungen nicht aus frischen,vitaminhaltigen Speisen, so daß es sich zudem um eine einseitige Nahrung handelt.

Der Erfindung liegt die Aufgabe zugrunde, ein Verfahren und die zugehörigen Sachen vorzuschlagen, durch die eine günstige Bevorratung der verwendeten hochwertigen Bestandteile sowie deren Herstellung ermöglicht ist, um gefüllte Gebäcktaschen zum Verkauf im Fast-Food-Marktbereich oder dergleichen günstig anbieten zu können, ohne daß beim Verzehr aus der Hand Verschmutzungen an Händen und Kleidung eintreten, diese Speisen rationell und hygienisch einwandfrei herzustellen sind, ernährungsphysiologisch wertvoll, sorten- und inhaltsstoffmäßig vielfältig, kurz vor dem Verzehr wunschgemäß zusammenzustellen und als Warm- oder Kaltspeisen bzw. als zusammengesetzte Warm- und Kaltspeisen anzubieten sind.

Diese Aufgabe wird erfindungs- verfahrensgemäß dadurch gelöst, daß entweder die gebackenen leeren Gebäcktaschen und die Speisen zur Füllung als solch geformte Stücke, wie es für das Einlegen in erstere erforderlich ist, ihren Bedürfnissen in bezug auf die Luftfeuchtigkeit, die Temperatur, den Einfluß von Keimen, aufbewahrt werden und nach Klärung des Kundenwunsches bezüglich der Speisenzusammenstellung diese als Füllung in die entsprechende Gebäcktasche eingebracht sowie dann in erforderlicher Weise wärmebehandelt werden, wonach anschließend durch Einfüllen oder Auftragen der Speisen,die nicht mit Wärme zu behandeln sind,aber zum Speisenzusammenstellungsplan gehören, beizustellen sind, oder daß die einzufüllenden Speisen in sämiger oder breiiger bzw. gelierter Form, wie Gulasch, Fleisch-, Gemüsesalate, Kaltschalen oder Quarkspeisen, in Verzehrtemperatur in die Gebäcktaschen eingegeben werden.

Die Aufgabe der Erfindung wird in ezug auf die zu kombinierenden Sachen dadurch gelöst, daß die in Größe und Form zum Verzehr passenden Gebäcktaschen aus geeignetem Teig, der auf Getreide- oder Gemüse-Eiweißstoffbasis hergestellt sein kann, mittels Formen gefertigt sind, dann je nach den Bestandteilen und Erfordernissen nur getrocknet oder gebacken werden und daß je nach den Speisekombinationen die hierfür in Betracht kommenden Einlagen in Formstücken,passend zum Einsetzen in Gebäcktaschen,zu erstellen sind, was durch Eingeben in Formen, durch Pressen oder dergleichen, unterstützt durch Gelieren oder Tieffrieren,erfolgen kann.

Speisen, insbesondere wenn sie aus betrieblichen Gründen zu bevorraten sind, wie solche aus Fleisch, Fisch, Käse, Pilzen oder solche aus eiweißreichen, vegetarischen Bestandteilen, wie Sojakost, Gemüse, z.B. Spinat oder dergleichen, die verderblich sind, sind im tiefgefrorenen Zustand am besten zu handhaben, und ihre Erhitzung nach Eingeben in die Taschen erfolgt zweckmäßigerweise zur schnellen Herrichtung in Mikrowellenherden, wobei Zusätze, wie Soßen und dergleichen,vor dem Erhitzen zugefügt werden können. Hingegen können Speisen in Formstücken, die auf andere Weise haltbar gemacht sind, z.B. durch Beigabe entsprechender Zusatzstoffe oder Bestandteile, bei kühler oder Zimmertemperatur gelagert werden, was einrichtungsmäßig einfacher ist, da auch die Erwärmung zum Verzehr mittels Wärmequellen ohne elektrischen Strom erforderlichenfalls einfacher und auch eher in angemessener Zeitspanne erfolgen kann.

Die Erfindung ist durch die Patent-Unteransprüche weiter gekennzeichnet.

In der Zeichnung sind Ausführungsbeispiele für die verwendeten Sachen dargestellt, es zeigen:

Fig. 1 eine leere Gebäcktasche,

Fig. 2 den Querschnitt durch eine leere Gebäcktasche mit Deckel,

Fig. 3 eine Gebäcktasche mit einer Schale oberhalb einer Seitenwand,

Fig. 4 eine Schale aus dünnem Oblatengebäck oder dgl.,

Fig. 5 eine Gebäcktasche mit Zwischenboden.

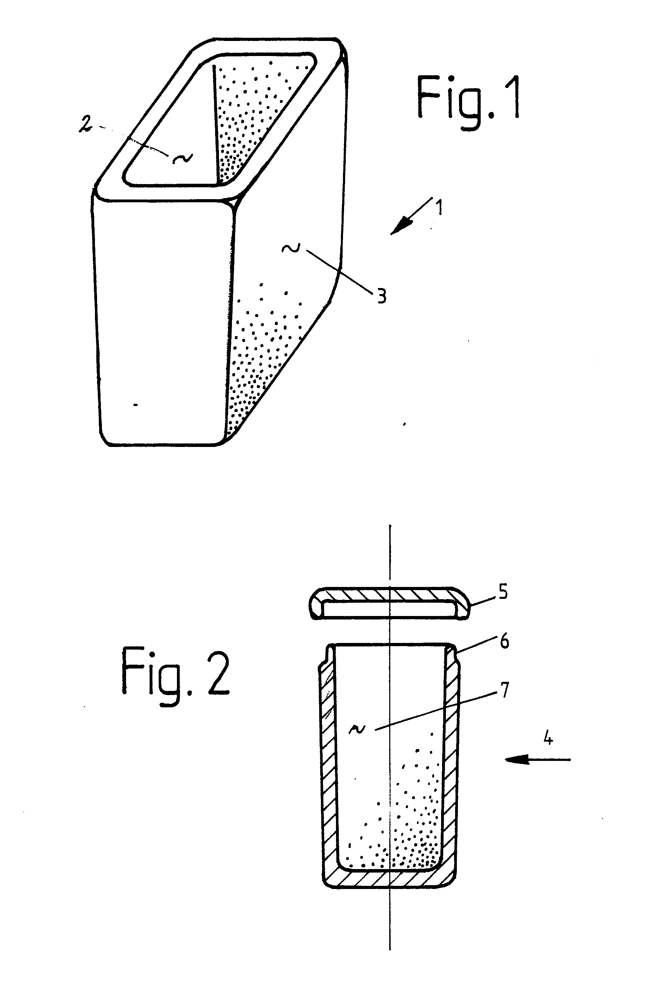

Die Gebäcktasche 1 gemäß Fig. 1 ist aus geeignetem Teig auf Getreide-, Kartoffelbasis oder einem Gemisch aus diesen unter Zuhilfenahme einer Preßform durch Backen erzeugt worden, wobei backtechnisch so vorzugehen ist, daß dünne Wandstärken und ein erforderliches Maß an Elastizität der Wände vorliegt, damit beim Abbeißen die Gebäcktasche nicht im zunächst verbleibenden Bereich abbröckelt. Die Außenflächen 3 können vor dem Backen so behandelt werden, daß sie mit einer feinporigen, glatten und etwas schwerer Feuchtigkeit aufnehmenden Kruste versehen sind, wobei der Innenraum 2 zu füllen ist.

Gemäß Fig. 2 ist für die Gebäcktasche 4 ein Deckel 5 vorgesehen, der auf den Klemmsitz 6 aufgeschoben wird und hier mit oder ohne Zusätze seinen Halt findet, so daß die Füllung, die in den Innenraum 7 eingegeben wurde, auch vor dem Verzehr allseitig verschlossen aufbewahrt ist, was oft Vorteile bietet, z.B. bei staubigen und kalten Verhältnissen,oder durch den Deckel kann bei entsprechender Ausbildung ein Zubrot geboten werden.

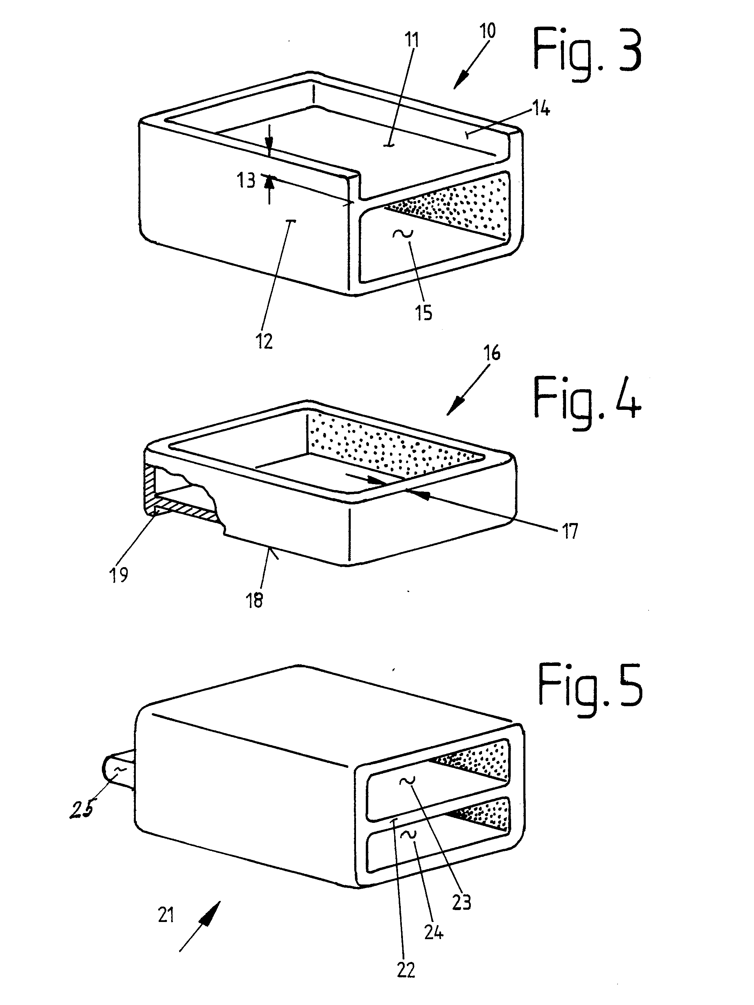

Die Gebäcktasche 10 gemäß Fig. 3 weist außerhalb einer Außenfläche 11 durch Verlängern der Seitenflächen 12 im Bereich 13 eine - schalenartige Ausführung 14 auf, die dazu dient, besondere Zugaben, wie beispielsweise frische Salate, aufzunehmen, damit diese, wenn die Gebäcktasche 10 mit Inhalt erhitzt ist, weniger erwärmt werden, wobei auch die Vorderseite geschlossen sein kann.

Die Schale 16 gemäß Fig. 4 kann mit besonders dünnen Wandstärken 17 ausgeführt sein und dient ebenfalls dazu, Speisen der Füllung, die vor dem Verzehr nicht mit anderen vermischt werden sollen oder, wie bereits erwähnt, nicht so sehr zu erwärmen sind, aufzunehmen. Solche Schalen 16 können auf Gebäcktaschen aufgesetzt werden und hierfür an ihrer Unterseite 18 zum besseren Halt einen kleinen Rand 19 aufweisen. Es sit auch möglich, daß Schalen dieser Art in Innenräume 7 bzw. 15, je nach dem vorliegenden Bedarfsfall, zusätzlich zu anderen bereits eingegebenen Speisen eingesetzt werden, wodurch z.B. bei aufgegebenem grünem Salat für die kurze Verzehrzeit eine Wärmeisolation erreicht ist oder das Einbringen in den Innenraum 15 erleichtert werden kann.

Die Gebäckasche 21 gemäß Fig.5 weist durch die Trennwand 22 zwei Innenräume 23 und 24 auf, so daß hierdurch verschiedene Speisen, die vor dem Verzehr günstigerweise nicht zusammenkommen sollen, weil ihre Struktur durch Zusammenfallen,z.B. infolge chemischer Beeinflussung, an Ansehen und Geschmack sowie Wert verlieren würde, getrennt bleiben. Außerdem kann in einem Innenraum z.B. 23 eine zu erwärmende und in den anderen Innenraum 24 nach der Erwärmung eine an sich nicht zu erwärmende oder nur wenig zu erwärmende Speise, wie grüner Salat oder dergleichen, eingegeben werden.

Vorteilhaft ist es, daß als Wunschausführung an den Gebäcktaschen kleinere Griffstücke 25 vorhanden sind, mit denen sie während des Verzehrs festgehalten werden können, und die wegzuwerfen sind, wenn z.B. diese mit nicht sauberen Händen erfaßt werden mußten.

Es kann auch so vorgegangen werden, daß die Gebäcktaschen aus hochkalorienreichen bzw. eiweißhaltigen Bestandteilen, wie z.B. mit entsprechenden Fett-, Soja-, Zucker-, Ei-oder dergleichen Zusätzen zu Getreide- oder Kartoffelmehlen hergestellt sind oder auch,daß die ganz aus solchen Zusätzen bestehen. Die Füllungen können geeignet sein,kalt oder erhitzt gegessen zu werden, wobei sie aus sogenannter leichter Kost, wie Gemüsen, Salaten, auch Obstsalaten,bestehen können, so daß die Mahlzeiten in jeder Beziehung doch vollwertig sind.

Auch backtechnisch kann dafür Vorsorge getroffen sein, daß z.B. die äußeren Bereiche der Wände der Gebäcktaschen fester und feuchtigkeitsundurchlässiger sind, indem z.B. die Außenformteile mit größerer Hitze als die inneren gefahren werden und die äußeren Flächen hierzu mit geeigneten Mitteln bestrichen sind. Hierdurch kann von den Innenseiten die Feuchtigkeit der eingegebenen Speisen eher aufgenommen werden,ohne daß die Gebäcktaschen während der Verzehrzeit ihre Stabilität verlieren.

Zur bequemen Erwärmung der ganz oder teilweise gefüllten Gebäcktaschen in größerer Anzahl sind geeignete Gestelle oder Behälter bereitzuhalten, in die diese - je nach dem Inhalt - in Hochode Flachlage eingestellt werden, und wenn es sich um Behälter handelt, liegt auch für die Speisen eine Wärmeisolation vorliegt, was von Bedeutung ist, wenn zwischen der Erwärmungsstelle bis zum Verzehrplatz eine größere Wegstrecke liegt oder auch mit Wartezeiten zu rechnen ist.

Die mit der Erfindung erzielten Vorteile bestehen insbesondere darin, daß zum Schnellimbiß oder dgl. Gebäcktaschen aus angenehm verzehrbaren, zumindest in den Außenbereichen erschwert feuchtigkeitsdurchlässigen, so elastischen,daß sie beim Verzehr nicht bröckeln, bis auf eine Seite geschlossenen, in der Größe zum Verzehr geeigneten und übereinstimmenden und dünnwandigen Backwaren zur Verfügung stehen, in die vor dem Verzehr nach Bestellung Speisen, wie Fleisch-, Fisch-, Gemüsegerichte oder Salate in jeder Form und Zubereitung, als passend geformte Stücke, tiefgefroren oder auf andere Weise formstabil und haltbar gemacht, eingegeben, bedarfweise erhitzt und gegebenenfalls mit nicht zu erhitzenden Speisen ergänzt werden. Hierdurch ist erreicht, daß auch im Schnellimbißbereich Vollwertnahrung angeboten wird, diese ohne Gefahr, sich beim Essen zu beschmutzen, und in angenehmer Körperhaltung auch im Stehen eingenommen werden kann und daß preiswerte Gesundkost zur Verfügung steht sowie Reinigungsstoffe für Eßgeschirr und Verpackungsmaterialien, Einweggeschirr nicht benötigt und Rohstoffe eingespart werden, aber auch kein Müll anfällt und die Umwelt nicht belastet wird.

## Ansprüche

1. Verfahren zur Herstellung verzehrfertiger, gefüllter Gebäcktaschen (1, 4, 10, 16, 21), die geeignet sind, im Marktbereich, Imbißstuben, Schnellrestaurants und dergleichen, dem sogenannten Fast-Food-Markt, angeboten zu werden, in ähnlicher Art, wie es beim gefüllten Fladenbrot aus dem arabischen Raum bekannt ist, dadurch gekennzeichnet, daß entweder die gebackenen leeren Gebäcktaschen (1, 4, 10, 16, 21) und die Speise zur Füllung als solch geformte Stücke, wie es für das Einlegen in erstere erforderlich ist, ihren Bedürfnissen in bezug auf die Luftfeuchtigkeit, die Temperatur, den Einfluß von Keimen, aufbewahrt werden und nach Klärung des Kundenwunsches bezüglich der Speisenzusammenstellung diese als Füllung in die entsprechende Gebäcktasche eingebracht sowie dann in erforderlicher Weise wärmebehandelt werden, wonach, anschließend durch Einfüllen oder Auftragen der Speisen, die nicht mit Wärme zu behandeln sind, aber zum Speisenzusammenstellungsplan gehören, beizustellen sind, oder daß die einzufüllenden Speisen in sämiger oder breiiger bzw. gelierter Form, wie Gulasch, Fleisch-, Gemüsesalate, Kaltschalen oder Quarkspeisen, in Verzehrtemperatur in die Gebäcktaschen eingegeben werden.

2. Verfahren nach Anspruch 1, dadurch gekennzeichnet, daß die Gebäcktaschen und die als Füllung in sie vorgesehenen Speisen erst aufgrund der erfolgten Bestellung zusammengestellt werden.

3. Verfahren nach den Ansprüchen 1 und 2, dadurch gekennzeichnet, daß die mit zu erwärmenden Speisen gefüllte Gebäcktaschen einzeln oder in einer Vielzahl in Gestelle oder Kästen eingebracht und diese in Aufwärmeeinrichtungen, vorzugsweise in Mikrowellenherde, zum Erhitzen eingestellt werden.

4. Verfahren nach Anspruch 1 und folgenden, dadurch gekennzeichnet, daß die als Füllung vorgesehenen Speisen zum Einsetzen in die Gebäcktaschen (1,4,10,16,21) als in letztere passende zusammenhängende Stücke, tiefgefroren oder gepreßt bzw. geformt und durch elieren oder dergleichen verfestigt vorliegen.

5. Verfahren nach den Ansprüchen 1 und 3, dadurch gekennzeichnet, daß die als Füllungen vorgesehenen Speisen in Verzehrtemperatur in die Gebäcktaschen (1,4,10,16,21) eingegossen bzw eingebracht werden.

6. Sachen, die zur Durchführung des Verfahrens nach den Ansprüchen 1 bis 5 benötigt werden, dadurch gekennzeichnet, daß die Gebäcktaschen (1, 4, 10, 16, 21) als dünnwandige (2), in Formanlagen erstellte und gebackene bzw. getrocknete, die Feuchtigkeit schwer durchlassende, jedoch dichte, angenehm zu verzehrende, etwas elastische, nicht bröckelnde Behälter erstellt sind.

7. Sachen nach Anspruch 6, dadurch gekennzeichnet, daß für die offene Seite der Gebäcktasche (4) ein schließend und fest aufzusetzender Deckel (5) vorgesehen ist, der auch in verdickter Ausführung ein Ernährungszusatz darstellen kann.

8. Sachen nach Anspruch 6 und 7, dadurch gekennzeichnet, daß die Gebäcktasche (10) an einer breiten Außenfläche (11) durch Verlängern der Seitenflächen (12) als Schale (14) ausgeführt ist, wobei die Vorderseite ohne Verlängerung oder mit einer kleineren oder auch mit einer solchen in Höhe der anderen ausgebildet ist.

9. Sachen nach Anspruch 6 und 7, dadurch gekennzeichnet, daß Schalen (16), die besonders dünne Wandstärken (17) aufweisen können, z.B. 1,5 bis 2,5 mm, und auf Gebäcktaschen (1, 4, 21) aufgesetzt werden können und durch einen an ihrer Unterseite (18) vorgesehenen Rand (19) einen Halt auf den Gebäcktaschen (1, 4, 21) erhalten.

10. Sachen nach Anspruch 6, 7 und 9, dadurch gekennzeichnet, daß die Gebäcktasche (21) Trennwände (22) und Handgriffe (25) aufweisen kann.

Fig. 1

Fig. 2

Fig. 3

Fig. 4

Fig. 5